# FASCICULE DE BREVET EUROPEEN

(11) **EP 0 880 429 B1**
(45) Date de publication et mention de la délivrance du brevet: **09.10.2002**
(21) Numéro de dépôt: 97935630.0
(22) Date de dépôt: 25.07.1997
(51) Int. Cl.: B27K 5/00

(54) **PROCEDE DE TRAITEMENT DU BOIS A ETAPE DE TRANSITION VITREUSE**
VERFAHREN ZUR BEHANDLUNG VON HOLZ AM GLASPUNKT
METHOD FOR TREATING WOOD AT THE GLASS TRANSITION TEMPERATURE THEREOF

(30) Priorité: 26.07.1996 FR 9609455
(43) Date de publication de la demande: 02.12.1998
(73) Titulaire: N O W (New Option Wood), 17100 Saintes (FR)
(72) Inventeur: GUYONNET, René, F-42000 Saint-Etienne (FR)
(74) Mandataire: Fort, Jacques
(86) Numéro de dépôt international: FR9701395
(87) Numéro de publication internationale: WO98004392

(56) Documents cités:
- EP-A- 0 018 446
- WO-A-94/27102
- FR-A- 2 604 942
- FR-A- 2 720 969
- "Glass transitions of wood components hold implications for molding and pulping processes", TAPPI, July 1982, Vol. 65, No. 7, pages 107-110

## Description

La présente invention concerne un procédé de traitement du bois à l'état naturel.

On sait qu'à l'état naturel le bois, ou les fibres de bois qui sont au contact d'une atmosphère humide, ont tendance à se gorger d'eau allant jusqu'à absorber la valeur de leur propre poids de celle-ci. Cette absorption d'eau s'accompagne d'une part d'un gonflement et d'autre part d'une perte des qualités mécaniques et des qualités de cohésion du matériau pouvant aller dans certains cas jusqu'à une désagrégation avancée de celui-ci. C'est pourquoi on a pour habitude de faire précéder toute étape d'usinage du bois d'une étape de séchage qui, en éliminant l'eau de celui-ci, améliore sa stabilité dimensionnelle.

Si l'étape de séchage permet d'éliminer l'eau du bois elle ne modifie en rien par contre son caractère hydrophile, si bien qu'il est de nouveau apte à réabsorber l'eau éliminée lors du séchage lorsqu'il se trouve de nouveau en atmosphère humide.

Afin de diminuer le caractère hydrophile du bois naturel et lui conférer ainsi une stabilité dimensionnelle durable, on a proposé différentes techniques de traitement thermique à haute température. On a ainsi proposé, notamment dans le brevet français FR-A-2.512.053, de chauffer une matière ligneuse fragmentée, éventuellement sous une forme agglomérée, sous atmosphère neutre à une température comprise entre 200°C et 280°C. Si un tel traitement permet d'obtenir un bois stabilisé dimensionnellement, il diminue par contre les qualités mécaniques du matériau.

On a également proposé de faire subir au bois naturel différentes étapes de traitement comprenant notamment un séchage en circuit ouvert suivi d'un chauffage progressif et d'un maintien en circuit fermé à une température comprise entre 180°C et 280°C. Outre qu'une telle technique ne permette pas d'obtenir de façon constante une stabilité dimensionnelle et une diminution du caractère hydrophile du bois traité, elle s'accompagne la plupart du temps de la formation dans celui-ci de criques et de fendillements.

La présente invention a pour but de proposer un procédé de traitement du bois qui permette de conférer à celui-ci un caractère hygrophobe et une bonne stabilité dimensionnelle, sans pour autant provoquer la création de criques et de fendillements.

La présente invention a ainsi pour objet un procédé de traitement du bois, du type dans lequel on soumet une pièce de bois à traiter à un traitement thermique, du type dit à haute température, pendant une durée déterminée, caractérisé en ce qu'il comporte une étape préalable au traitement thermique au cours de laquelle on soumet la pièce de bois à une température égale à sa température de transition vitreuse, et l'on maintient ladite pièce du bois à cette température tant qu'elle n'a pas atteint, dans sa totalité, ladite température de transition vitreuse.

La demanderesse a ainsi établi, par des essais effectués en laboratoire sur de nombreuses essences différentes de bois, qu'en maintenant le bois à traiter pendant un temps déterminé à sa température de transition vitreuse, suffisant pour que la totalité de sa masse atteigne cette dite température, on évitait par la suite tous les phénomènes de formation de fendillements et d'éclatement du bois qui se manifestaient habituellement lorsque celui-ci était soumis à un traitement haute température.

Un tel traitement peut être effectué dans un enceinte, et dans ce cas on peut soumettre la pièce de bois à traiter à une augmentation progressive, voire linéaire, de la température. Ce traitement peut également être effectué par immersion du bois à traiter dans un bain thermorégulé, par exemple un bain liquide, ou un bain solide formé de fines particules solides.

On sait que la température de transition vitreuse d'un bois correspond à la zone de température où les éléments constituants de celui-ci, c'est à dire ceux qui lui confèrent ses caractéristiques de rigidité, perdent justement ce caractère de rigidité, si bien que le matériau passe d'un état rigide à un état souple, ce qui permet aux contraintes internes du bois de se libérer.

Afin de déterminer la durée nécessaire pendant laquelle le bois à traiter doit être soumis à la température de transition vitreuse pour que la totalité du matériau atteigne cette température, on peut réaliser, préalablement à l'opération de traitement thermique, une série de tests sur des échantillons de bois de même essence de même masse et sensiblement de mêmes dimensions, dans lesquels on dispose des capteurs de température, notamment au coeur du matériau. Ces capteurs permettent, en mesurant la température en différents points de la pièce, de déterminer la durée qui est nécessaire pour que tous les points de celle-ci, et notamment le coeur, aient atteint la température de transition vitreuse. Il suffira ensuite, au cours du processus de traitement industriel, de maintenir la pièce de bois à la température de transition vitreuse pendant cette durée. On pourra également disposer des capteurs de mesure dans une pièce servant de témoin et arrêter le traitement lorsque tous les capteurs, et notamment un capteur disposé au coeur de ce témoin, on atteint la température de transition vitreuse.

Suivant l'invention on peut mettre à contribution cette étape de transition vitreuse du bois pour exercer sur celui-ci, à l'aide d'un dispositif approprié, une contrainte mécanique susceptible de lui conférer une forme particulière souhaitée. On peut également utiliser cette contrainte mécanique pour densifier la pièce de bois sur tout ou partie de son volume, ce qui a pour effet d'améliorer ses caractéristiques mécaniques.

On décrira ci-après, à titre d'exemple non limitatif, une forme d'exécution de la présente invention, en référence au dessin annexé sur lequel :
La figure 1 est un diagramme représentant les courbes de variation de la température de l'enceinte de traitement et du bois traité, à savoir du frêne, en fonction du temps, lors de la mise en oeuvre d'un procédé de traitement du bois suivant l'invention.
La figure 2 est une vue partielle en coupe transversale d'une pièce de bois destinée à subir un traitement suivant l'invention.
La figure 3 est un diagramme partiel d'une variante de mise en oeuvre de la figure 1 représentant à grande échelle l'étape de traitement à la température de transition vitreuse.
La figure 4 est un diagramme représentant respectivement les courbes de variation de la température de l'enceinte de traitement et du bois traité, à savoir du pin sylvestre, en fonction du temps, lors de la mise en oeuvre d'un procédé de traitement du bois suivant l'invention.

### EXEMPLE 1

Dans un premier exemple du procédé de traitement suivant l'invention, on a traité une pièce de bois 1 provenant d'une essence de bois de type arbre feuillu, à savoir du frêne, de forme parallélépipédique dont les dimensions étaient de 98 cm de longueur sur une section de 2,7 cm X 8 cm. On a fait appel à une enceinte de traitement constituée d'un four électrique qui peut être, si on le souhaite, mis en communication avec l'atmosphère. On a introduit dans la pièce de bois 1 trois capteurs de température, à savoir un premier capteur 3 qui a été disposé en périphérie de la pièce, à environ 1 mm de la surface externe de celle-ci, un second capteur 5 qui a été disposé au coeur de la pièce, et un troisième capteur 7 qui a été disposé en une position intermédiaire entre ces deux positions extrêmes.

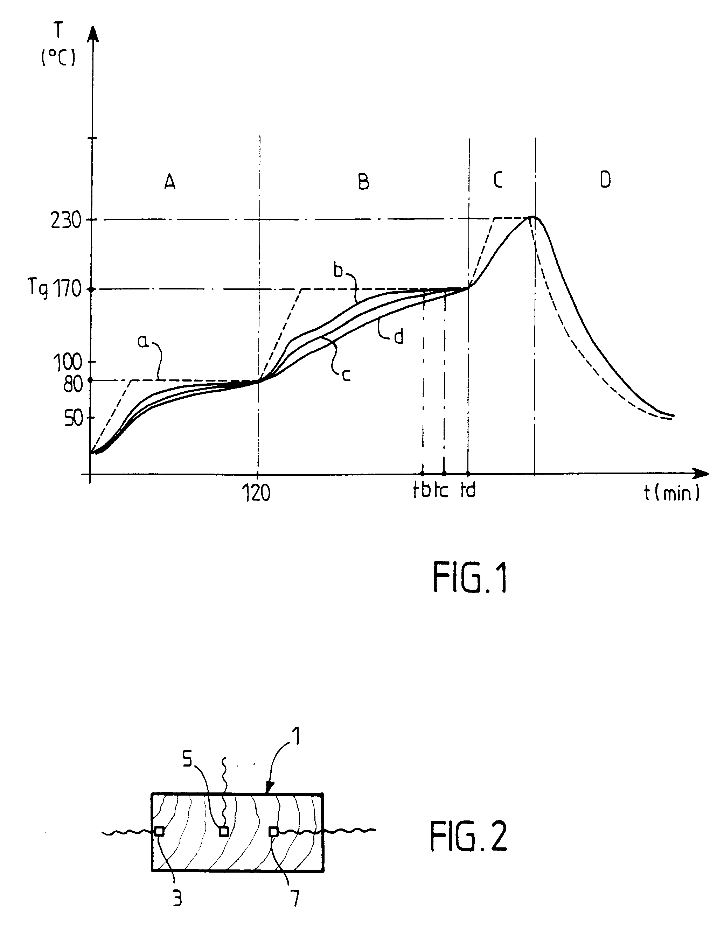

On a reproduit sur la figure 1 quatre courbes superposées représentant la variation en fonction du temps d'une part de la température du four de traitement (courbe a en pointillé sur le dessin) et, d'autre part, les températures respectives relevées par les trois capteurs 3, 7 et 5 (courbes respectives b, c, d en traits pleins sur le dessin). Ces courbes s'étendent sur quatre zones essentielles repérées A, B, C, D correspondant à quatre étapes successives du traitement.

L'étape A correspond à une étape de séchage, qui est de type classique et qui est parfaitement connue de l'état antérieur de la technique. Au cours de cette étape, on élève progressivement la température du four, de la température ambiante jusqu'à environ 80°C. Cette étape, partant d'un bois dans lequel il reste environ 10% d'eau, a permis d'éliminer 6% de celle-ci. On sait cependant que si, après cette étape, le bois est mis de nouveau au contact d'une atmosphère humide il se rechargera de nouveau immédiatement en eau.

Il est donc nécessaire de faire subir à la pièce de bois 1 un traitement qui lui conférera, à titre définitif, un caractère hygrophobe. Cette étape, qui a été mentionnée précédemment, et qui est celle qui correspond à la zone C sur la figure 1, consiste à faire subir à la pièce de bois un traitement thermique qui la porte à une température d'environ 230°C. C'est au cours de cette étape que les bois soumis à ce type de traitement, suivant l'état antérieur de la technique, subissent les craquelures et les fendillements précédemment mentionnés.

Suivant l'invention on met ainsi en oeuvre, entre l'étape de séchage A et l'étape de traitement proprement dit C, une étape de traitement intermédiaire B, ou traitement de stabilisation. Au cours de cette étape, on élève progressivement la température du four de la température de séchage de 80°C jusqu'à la température de transition vitreuse Tg du frêne (soit environ 170°C) avec une vitesse de montée en température voisine de celle mise en oeuvre pour le séchage, à savoir environ 4°C/min. La température de transition vitreuse Tg est celle de la moyenne des constituants du frêne, c'est-à-dire des lignines sèches et des hémicelluloses sèches, de ce bois. Lorsque la température de l'enceinte de traitement atteint la valeur Tg, soit la valeur d'environ 170°C, des moyens de réglage de température dont le four de traitement est pourvu, maintiennent la température à cette valeur palier.

Comme on peut le voir sur le schéma des figures 1 à 3, les trois zones de la pièce de bois comportant les capteurs 3, 5, et 7 n'atteignent pas ensemble la température de transition vitreuse Tg. En effet le capteur 3, le plus proche de la surface externe de la pièce de bois 1, atteint le premier la température Tg à un instant tb voisin de 255 min, et le capteur 5 qui est disposé au coeur de la pièce de bois 1 atteint cette même température Tg le dernier, à un instant td voisin de 270 min. Il importe donc, suivant l'invention, de maintenir la pièce de bois à traiter à la température Tg jusqu'à ce que les trois capteurs 3, 5, 7 montrent bien que les zones du bois où ils sont disposés ont bien atteint la température Tg, à savoir dans le cas présent jusqu'au temps td de 270 min.

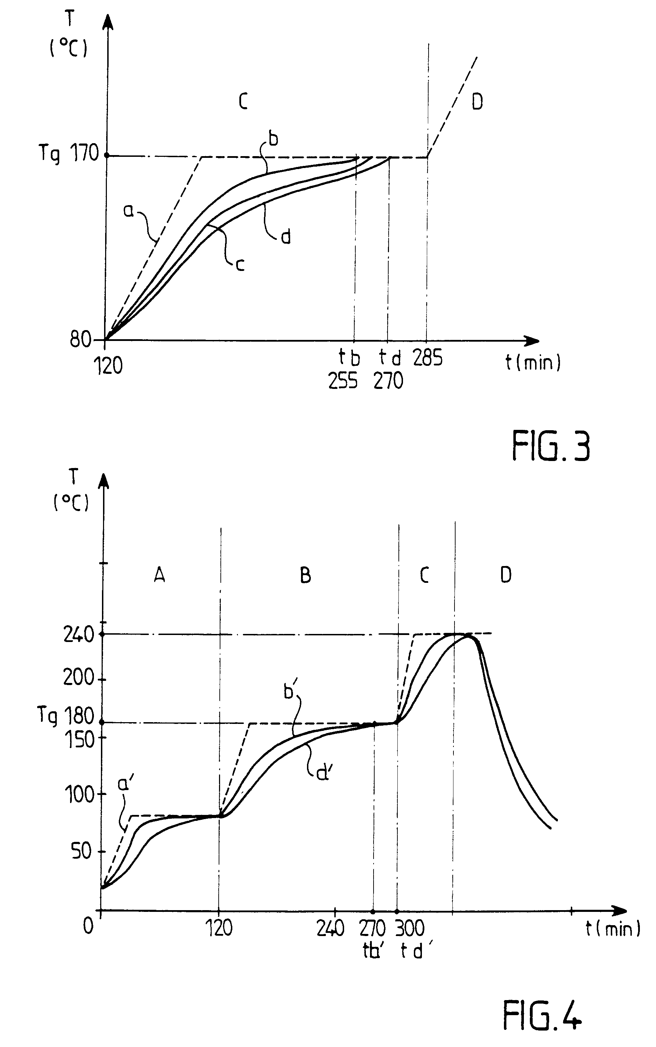

La demanderesse a constaté que l'on pouvait, sans nuire à la qualité du traitement réalisé, prolonger le maintien de la pièce de bois à la température Tg au delà de l'instant td où la totalité de la pièce a atteint cette température. Dans le mode de mise en oeuvre de l'invention, représenté sur la figure 3, on prolonge le palier à la température Tg au delà de l'instant td, d'une durée égale à la différence des instants td-tb. On est ainsi quasiment sûr que l'ensemble de la masse de la pièce de bois 1 à traiter a bien atteint la température de transition vitreuse Tg.

On réalise ensuite, comme mentionné précédemment, la troisième étape de traitement thermique proprement dit qui correspond à la zone C de la courbe de la figure 1 et qui consiste, dans ce cas particulier, à porter la pièce de bois 1 à une température voisine de 230°C, afin de faire subir à cette pièce un traitement dit de rétification, suivant un mode de traitement connu de l'état antérieur de la technique.

On a constaté, après refroidissement de la pièce,(zone D sur la figure 1) que le bois obtenu était exempt de tout fendillement ou craquelure.

### EXEMPLE 2

Dans un second exemple du procédé de traitement suivant l'invention, on a traité une pièce de bois 1 provenant d'une essence de bois de type résineux, à savoir du pin sylvestre, de forme parallélépipédique dont les dimensions étaient de 90 cm de longueur sur une section de 2,8 cm X 9,2 cm. On a effectué le traitement en suivant une méthode identique à celle décrite dans le premier exemple. On a introduit dans la pièce de pin sylvestre 1 deux capteurs de température, à savoir un premier capteur 3 qui a été disposé en périphérie de la pièce, à environ 1 mm de la surface externe de celle-ci, et un second capteur 5 qui a été disposé au coeur de ladite pièce.

On a reproduit sur la figure 4 trois courbes superposées représentant la variation en fonction du temps d'une part de la température du four de traitement (courbe a' en pointillés) et, d'autre part, les températures respectives relevées par le capteur 3 disposé en périphérie (courbe b') et par le capteur 5 disposé au coeur du matériau (courbe d'). Comme précédemment ces courbes s'étendent sur quatre zones essentielles repérées de A, B, C, D correspondent aux quatre étapes successives du traitement précédent. On constate sur cette courbe que la température de transition vitreuse Tg, qui est de 180°C dans le cas présent, est atteinte par le capteur périphérique 3 au bout d'un temps tb' d'environ 270 minutes, alors que cette même température Tg est atteinte par le capteur 5 disposé au coeur de la pièce de bois au bout d'un temps d'environ 300 minutes. Dans le présent cas un traitement industriel de pièces de bois de pin sylvestre de mêmes dimensions devra en conséquence assurer un maintien de ces pièces de bois à une température de 180°C pendant un temps égal à au moins 300 minutes avant que ces pièces subissent un traitement thermique haute température, tel que par exemple un traitement de rétification.

Le traitement suivant l'invention peut également être effectué en plongeant la pièce de bois à traiter dans un bain thermorégulé qui est maintenu à la température de transition vitreuse Tg du bois concerné. Le bain peut être constitué d'un produit dont la température de fusion est inférieure à la température Tg, tel que notamment de la paraffine, des huiles de type silicones etc... Le bain pourra également être constitué d'une solution solide formée de fines particules telles que notamment des particules de sable.

Ce mode de mise en oeuvre est particulièrement intéressant en ce qu'il permet d'assurer un maintien en température plus facile et plus précis que dans le cas où le traitement est effectué dans une enceinte.

Bien entendu, le procédé de traitement suivant l'invention peut également être mis en oeuvre dans un processus de traitement qui ne débuterait pas par un séchage.

Suivant l'invention on pourra mettre à profit le caractère malléable pris par une pièce de bois lorsqu'elle atteint la température de transition vitreuse, pour la déformer et lui faire adopter une conformation choisie. De même on pourra exercer sur cette pièce de bois une force de compression, de façon à modifier sa densité et améliorer du même coup ses caractéristiques mécaniques.

## Revendications

1. Procédé de traitement du bois, suivant lequel on soumet une pièce de bois à un traitement thermique à haute température précédé d'un chauffage,
**caractérisé en ce que**, successivement :
- au cours du dit chauffage on soumet la pièce de bois à une température égale à sa température de transition vitreuse (Tg) que l'on maintient au moins tant que la pièce de bois n'a pas atteint, dans sa totalité, la température de transition vitreuse et
- au cours du traitement à haute température on amène la pièce de bois de la température de transition vitreuse à la haute température conférant à la pièce de bois un caractère hygrophobe.

2. Procédé suivant la revendication 1, **caractérisé en ce que**, au cours du traitement à haute température, on augmente progressivement la température à laquelle est soumise la pièce de bois depuis la température de transition vitreuse jusqu'à la haute température conférant à la pièce de bois un caractère hygrophobe.

3. Procédé suivant la revendication 1 ou 2, **caractérisé en ce que**, au cours du dit chauffage, on accroît progressivement la température pour atteindre la température de transition vitreuse (Tg).

4. Procédé suivant la revendication 3, **caractérisé en ce que** l'accroissement jusqu'à la température de transition est sensiblement linéaire.

5. Procédé suivant la revendication 1, 2 ou 3, **caractérisé en ce que** le temps pendant lequel on soumet la pièce de bois à traiter à un chauffage à la température de transition vitreuse est égal au temps (td) nécessaire pour que le coeur de la pièce de bois atteigne la température de transition (Tg).

6. Procédé suivant la revendication 5, **caractérisé en ce qu'**on détermine le dit temps en disposant au coeur de la pièce de bois à traiter au moins un capteur de température (5) apte à fournir la température du coeur et on détermine le temps mis par le coeur de la pièce de bois pour atteindre la température de transition vitreuse (Tg).

7. Procédé suivant une quelconque des revendications précédentes, **caractérisé en ce que** le chauffage et le traitement thermique à haute température sont effectués dans une même enceinte.

8. Procédé suivant la revendication 7, **caractérisé en ce que**, pour traiter une pièce de bois feuillu,
- au cours du chauffage on amène et on maintient la température de l'enceinte à environ 170°C, et
- au cours du traitement thermique à haute température on amène et on maintient la température de l'enceinte à environ 230°C.

9. Procédé suivant la revendication 7, **caractérisé en ce que**, pour traiter une pièce de bois résineux,
- au cours du chauffage on amène et on maintient la température de l'enceinte à environ 180°C, et
- au cours du traitement thermique à haute température on amène et on maintient la température de l'enceinte à environ 240°C.

10. Procédé suivant l'une quelconque des revendications précédentes, **caractérisé en ce qu'**on effectue le traitement de la pièce de bois à la température de transition vitreuse dans une enceinte thermo-régulée.

11. Procédé suivant l'une quelconque des revendications précédentes, **caractérisé en ce que**, au cours du chauffage, on exerce, au moins en une partie de la pièce de bois, une force afin de modifier la densité ou la forme de cette partie.

12. Procédé suivant l'une quelconque des revendications 1 à 6, **caractérisé en ce que** le traitement thermique de la pièce de bois (1) s'effectue dans un bain thermo-régulé dans lequel elle est plongée.

## Claims

1. Method of treating wood, wherein a piece of wood is subjected to a high temperature heat treatment after a heating step, **characterized in that** it comprises the successive steps of:
- during said heating step, subjecting the piece of wood to a temperature equal to its glass transition temperature (Tg) which is maintained at least as long as the piece of wood has not completely reached the glass transition temperature (Tg) and
- during the high temperature treatment, bringing the piece of wood from the glass transition temperature up to the high temperature which confers a hygrophobic character to the piece of wood.

2. Method according to claim 1, **characterized in that**, during the high temperature treatment, the temperature to which the piece of wood is subjected is progressively increased from the glass transition temperature up to the high temperature which confers a hygrophobic character to the piece of wood.

3. Method according to claim 1 or 2, **characterized in that**, during said heating, the temperature is progressively increased up to the glass transition temperature (Tg).

4. Method according to claim 3, **characterized in that** the increase up to the transition temperature is substantially linear.

5. Method according to claim 1, 2 or 3, **characterized in that** the time during which the piece of wood to be treated is subjected to heating at the glass transition temperature is equal to the time (td) necessary for the core of the piece of wood (1) to reach the transition temperature (Tg).

6. Method according to claim 5, **characterized by** determining said time by disposing, at the core of the piece of wood to be treated, at least one temperature sensor (5) adapted to indicate the temperature of said core, and determining the time taken by the core of the piece of wood (1) to reach the glass transition temperature (Tg).

7. Method according to any one of preceding claims, **characterized in that** the heating and the high temperature thermal treatment are carried out in a same chamber.

8. Method according to claim 7, **characterized in that**, for treating a piece of deciduous wood,
- during the heating, the temperature of the chamber is increased to and maintained at about 170°C, and
- during the high temperature heat treatment, the temperature of the chamber is increased to and maintained at about 230°C.

9. Method according to claim 7, **characterized in that**, for treating a piece of resinous wood,
- during the heating, the temperature of the chamber is increased to and maintained at about 180°C, and
- during the high temperature heat treatment, the temperature of the chamber is increased to and maintained at about 240°C.

10. Method according to any one of the preceding claims, **characterized in that** the heat treatment of the piece of wood (1) at the glass transition temperature (Tg) is effected in a heat-regulated chamber.

11. Method according to any one of the preceding claims, **characterized in that**, during heating, a force of compression is exerted on at least part of the piece of wood in order to modify the density or shape of said part.

12. Method according to any one of claims 1-6, **characterized in that** the heat treatment of the piece of wood (1) is carried out in a heat-regulated bath in which it is immersed.

## Patentansprüche

1. Verfahren zur Behandlung von Holz, wobei ein Stück Holz bei hoher Temperatur einer thermischen Behandlung unterworfen wird, der eine Erwärmung vorausgeht, **dadurch gekennzeichnet, dass** nacheinander:
- das Holzstück während der Erwärmung einer Temperatur unterworfen wird, die gleich seiner Glasübergangstemperatur (Tg) ist, welche Temperatur zumindest solange aufrechterhalten wird, wie das Holzstück in seiner Gesamtheit die Glasübergangstemperatur nicht erreicht hat, und
- das Holzstück während der Behandlung bei hoher Temperatur von der Glasübergangstemperatur auf die hohe Temperatur gebracht wird, die dem Holzstück einen hygrophoben Charakter verleiht.

2. Verfahren nach Anspruch 1, **dadurch gekennzeichnet, dass** während der Behandlung bei hoher Temperatur die Temperatur, der das Holzstück unterworfen wird, nach und nach von der Glasübergangstemperatur bis auf die hohe Temperatur gesteigert wird, die dem Holzstück den hygrophoben Charakter verleiht.

3. Verfahren nach Anspruch 1 oder 2, **dadurch gekennzeichnet, dass** während der Erwärmung die Temperatur nach und nach gesteigert wird, um die Glasübergangstemperatur (Tg) zu erreichen.

4. Verfahren nach Anspruch 3, **dadurch gekennzeichnet, dass** die Steigerung der Temperatur bis hin zur Glasübergangstemperatur im Wesentlichen linear erfolgt.

5. Verfahren nach Anspruch 1, 2 oder 3, **dadurch gekennzeichnet, dass** die Zeit, während der das zu behandelnde Holzstück einer Erwärmung auf die Glasübergangstemperatur unterworfen wird, gleich der Zeit (td) ist, die notwendig ist, damit der Kern des Holzstücks die Glasübergangstemperatur (Tg) erreicht.

6. Verfahren nach Anspruch 5, **dadurch gekennzeichnet, dass** die Zeit bestimmt wird, indem im Kern des zu behandelnden Holzstücks zumindest ein Temperatursensor (5) angeordnet wird, der die Temperatur des Kerns liefern kann, und dass die Zeit, die von dem Kern des Holzstücks benötigt wird, um die Glasübergangstemperatur (Tg) zu erreichen, bestimmt wird.

7. Verfahren nach einem der vorangehenden Ansprüche, **dadurch gekennzeichnet, dass** die Erwärmung und die thermische Behandlung bei hoher Temperatur in der gleichen Einfassung durchgeführt werden.

8. Verfahren nach Anspruch 7, **dadurch gekennzeichnet, dass** zur Behandlung eines blättertragenden Holzstücks
- während der Erwärmung die Temperatur der Einfassung auf ungefähr 170°C gebracht und dort gehalten wird, und
- während der thermischen Behandlung bei hoher Temperatur die Temperatur der Einfassung auf ungefähr 230°C gebracht und dort gehalten wird.

9. Verfahren nach Anspruch 7, **dadurch gekennzeichnet, dass** zur Behandlung eines harzigen Holzstücks
- während der Erwärmung die Temperatur der Einfassung auf ungefähr 180°C gebracht und dort gehalten wird, und
- während der thermischen Behandlung bei hoher Temperatur die Temperatur der Einfassung auf ungefähr 240°C gebracht und dort gehalten wird.

10. Verfahren nach einem der vorangehenden Ansprüche, **dadurch gekennzeichnet, dass** die Behandlung des Holzstücks bei der Glasübergangstemperatur in einer thermisch geregelten Einfassung durchgeführt wird.

11. Verfahren nach einem der vorangehenden Ansprüche, **dadurch gekennzeichnet, dass** während der Erwärmung zumindest auf einen Teil des Holzstücks eine Kraft aufgebracht wird, um die Dichte oder die Form dieses Teils des Holzstücks zu verändern.

12. Verfahren nach einem der Ansprüche 1 bis 6, **dadurch gekennzeichnet, dass** die thermische Behandlung des Holzstücks (1) in einem thermischen geregelten Bad erfolgt, in welches das Holzstück eingetaucht wird.
